# EUROPEAN PATENT APPLICATION

(11) **EP 4 152 666 A1**
(43) Date of publication of application: **22.03.2023**
(21) Application number: 20935370.5
(22) Date of filing: 13.05.2020
(51) Int. Cl.: H04L 5/00

(54) **UPLINK CONTROL INFORMATION SENDING METHOD AND APPARATUS**

(71) Applicant: Beijing Xiaomi Mobile Software Co., Ltd., Beijing 100085 (CN)
(72) Inventor: DONG, Xiandong, Beijing 100085 (CN)
(74) Representative: Gunzelmann, Rainer
(86) International application number: PCT/CN2020/090087
(87) International publication number: WO 2021/226885

(57) **Abstract**

The present disclosure relates to an uplink control information sending method, comprising: determining that the time domains of a plurality of PUCCHs overlap, the PUCCHs respectively carrying uplink control information with different priorities; combining the uplink control information with different priorities carried by the PUCCHs respectively; determining a target PUCCH, the ending position of the time domain of the target PUCCH being not later than the ending position of the time domain of a PUCCH where the uplink control information with the highest priority is located; and sending the combined uplink control information by means of the target PUCCH. In the present disclosure, the time, when the combined uplink control information is sent by the target PUCCH, is not later than the time, when the uplink control information with the highest priority is sent by a PUCCH where the uplink control information with the highest priority is located, thereby ensuring that the sending of the uplink control information with the highest priority is not delayed.

## Description

### TECHNICAL FIELD

The disclosure relates to the field of communication technologies, and in particular, to a method for transmitting uplink control information, an apparatus for transmitting uplink control information, an electronic device, and a computer-readable storage medium.

### BACKGROUND

A terminal can transmit uplink control information (UCI) to a base station on one physical uplink control channel (PUCCH), and the terminal can also transmit UCI to the base station on a plurality of PUCCHs respectively.

In some cases, the plurality of PUCCHs for carrying UCI may overlap in a time domain. In the related art, to successfully transmit the PUCCHs, the terminal may combine UCI carried respectively by the plurality of PUCCHs, and transmits it through one PUCCH.

However, currently transmitting the combined UCI through one PUCCH may cause a moment of transmitting certain UCI, which is relatively delayed compared to a moment of transmitting the certain UCI through an original PUCCH corresponding to the certain UCI.

### SUMMARY

In view of this, embodiments of the disclosure propose a method for transmitting UCI, an apparatus for transmitting UCI, an electronic device, and a computer-readable storage medium, to solve technical problems in the related art.

According to a first aspect of embodiments of the disclosure, a method for transmitting UCI is provided, including the following.

It is determined that a plurality of PUCCHs overlap in a time domain, in which the plurality of PUCCHs respectively carry UCI with different priorities.

The UCI with different priorities, carried on the plurality of PUCCHs respectively, is combined.

A target PUCCH is determined, in which a time domain end position of the target PUCCH is not later than a time domain end position of a PUCCH located by UCI with a highest priority.

The combined UCI is transmitted through the target PUCCH.

Optionally the target PUCCH is determined by the following.

In response to a number of bits of the combined UCI being less than or equal to an upper limit of a number of bits of UCI that the PUCCH located by the UCI with the highest priority carries, the PUCCH located by the UCI with the highest priority is determined as the target PUCCH.

Optionally, the plurality of PUCCHs include two PUCCHs, a PUCCH format (PF) of the PUCCH located by the UCI with the highest priority is PFO or PF1, a number of bits of UCI that each PUCCH carries is 1, and the target PUCCH is the PUCCH located by the UCI with the highest priority.

Optionally, the UCI includes at least one of the following:
a hybrid automatic repeat request acknowledgement (HARQ-ACK), a scheduling request, or channel state information.

Optionally, UCI carried on at least one PUCCH of the plurality of PUCCHs is the HARQ-ACK, and the target PUCCH is determined by the following.

In response to a number of bits of the combined UCI being greater than an upper limit of a number of bits of UCI that the PUCCH located by the UCI with the highest priority carries, an indicated PUCCH is determined based on downlink control information (DCI) corresponding to the HARQ-ACK.

In response to a time domain end position of the indicated PUCCH being not later than a time domain end position of the PUCCH located by the UCI with the highest priority, the indicated PUCCH is determined as the target PUCCH.

Optionally, the method further includes the following.

In response to the time domain end position of the indicated PUCCH being later than the time domain end position of the PUCCH located by the UCI with the highest priority, the UCI with the highest priority is transmitted through the PUCCH located by the UCI with the highest priority.

Optionally, the indicated PUCCH is determined based on the DCI corresponding to the HARQ-ACK by the following.

In response to the plurality of PUCCHs including at least two HARQ-ACKs, the indicated PUCCH is determined based on DCI with a latest time domain resource in DCI corresponding to the at least two HARQ-ACKs.

According to a second aspect of embodiments of the disclosure, an apparatus for transmitting UCI is provided, including an overlap determining module, an information combining module, a channel determining module, and an information transmitting module.

The overlap determining module is configured to determine that a plurality of PUCCHs overlap in a time domain, in which the plurality of PUCCHs respectively carry UCI with different priorities.

The information combining module is configured to combine the UCI with different priorities carried on the plurality of PUCCHs respectively.

The channel determining module is configured to determine a target PUCCH, in which a time domain end position of the target PUCCH is not later than a time domain end position of a PUCCH located by UCI with a highest priority.

The information transmitting module is configured to transmit the combined UCI through the target PUCCH.

Optionally, the information transmitting module is configured to, in response to a number of bits of the combined UCI being less than or equal to an upper limit of a number of bits of UCI that the PUCCH located by the UCI with the highest priority carries, determine the PUCCH located by the UCI with the highest priority as the target PUCCH.

Optionally, the plurality of PUCCHs includes two PUCCHs, a PUCCH format of the PUCCH located by the UCI with the highest priority is PFO or PF 1, a number of bits of UCI that each PUCCH carries is 1, and the target PUCCH is the PUCCH located by the UCI with the highest priority.

Optionally, the UCI includes at least one of the following:
a HARQ-ACK, a scheduling request, or channel state information.

Optionally, UCI carried on at least one PUCCH of the plurality of PUCCHs is the HARQ-ACK, and the information transmitting module is configured to: in response to a number of bits of the combined UCI being greater than an upper limit of a number of bits of UCI that the PUCCH located by the UCI with the highest priority carries, determine an indicated PUCCH based on DCI corresponding to the HARQ-ACK; and in response to a time domain end position of the indicated PUCCH being not later than a time domain end position of the PUCCH located by the UCI with the highest priority, determine the indicated PUCCH as the target PUCCH.

Optionally, the information transmitting module is further configured to, in response to the time domain end position of the indicated PUCCH being later than the time domain end position of the PUCCH located by the UCI with the highest priority, transmit the UCI with the highest priority through the PUCCH located by the UCI with the highest priority.

Optionally, the channel determining module is further configured to, in response to the plurality of PUCCHs including at least two HARQ-ACKs, determine the indicated PUCCH based on DCI with a latest time domain resource in DCI corresponding to the at least two HARQ-ACKs.

According to a third aspect of embodiments of the disclosure an electronic device is provided, including:
a processor; and
a memory for storing instructions executable by the processor.

The processor is configured to perform the method for transmitting UCI as described in any of the foregoing embodiments.

According to a fourth aspect of embodiments of the disclosure, a computer-readable storage medium is provided, on which computer programs are stored, and when the programs are executed by a processor, the actions in the method for transmitting UCI as described in any of the foregoing embodiments are performed.

In some embodiments, the target PUCCH is determined. Since the time domain end position of the target PUCCH is not later than the time domain end position of the PUCCH located by the UCI with the highest priority, the combined UCI is transmitted through the target PUCCH, which is not later than the UCI with the highest priority transmitted through the PUCCH located by the UCI with the highest priority, to ensure that the UCI with the highest priority may not be delayed in transmission.

### BRIEF DESCRIPTION OF THE DRAWINGS

To more clearly describe technical solutions in embodiments of the disclosure, the following will briefly introduce drawings needed in the description of the embodiments. Obviously, the drawings in the following description are only some embodiments of the disclosure. For those of ordinary skill in the art, without creative labor, other drawings can be obtained based on these drawings.
FIG. 1 is a flowchart illustrating a method for transmitting UCI, according to some embodiments of the disclosure.
FIG. 2 is a flowchart illustrating another method for transmitting UCI, according to some embodiments of the disclosure.
FIG. 3 is a flowchart illustrating yet another method for transmitting UCI, according to some embodiments of the disclosure.
FIG. 4 is a flowchart illustrating yet another method for transmitting UCI, according to some embodiments of the disclosure.
FIG. 5 is a flowchart illustrating yet another method for transmitting UCI, according to some embodiments of the disclosure.
FIG. 6 is a schematic diagram illustrating an application scenario of a method for transmitting UCI, according to some embodiments of the disclosure.
FIG. 7 is a schematic diagram illustrating another application scenario of a method for transmitting UCI, according to some embodiments of the disclosure.
FIG. 8 is a block diagram illustrating an apparatus for transmitting UCI, according to some embodiments of the disclosure.
FIG. 9 is a block diagram illustrating a device for transmitting UCI, according to some embodiments of the disclosure.

### DETAILED DESCRIPTION

The technical solutions in embodiments of the disclosure will be clearly and completely described below in conjunction with the drawings in embodiments of the disclosure. Obviously, the described embodiments are only a part of embodiments of the disclosure, rather than all the embodiments. Based on embodiments in the disclosure, all other embodiments obtained by those of ordinary skill in the art without creative work shall fall within the protection scope of the disclosure.

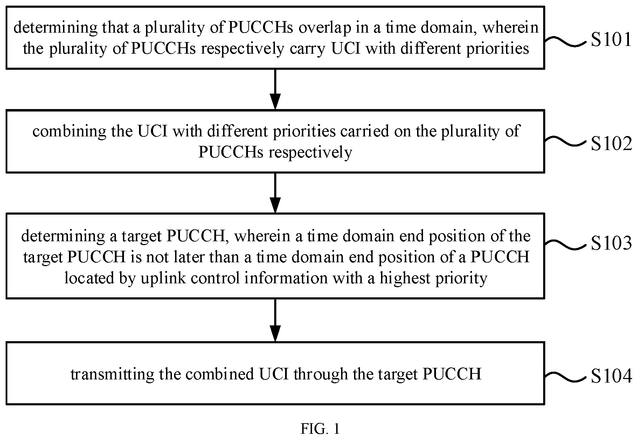

FIG. 1 is a flowchart illustrating a method for transmitting UCI, according to some embodiments of the disclosure. The method illustrated in some embodiments can be applicable to a terminal, which includes but is not limited to, an electronic device such as a mobile phone, a tablet computer, or a wearable device. The terminal may communicate with a base station, and the base station may be a fourth generation (4G) base station or a fifth generation (5G) base station.

As illustrated in FIG. 1, the method for transmitting UCI may include the following steps.

In step S101, it is determined that a plurality of PUCCHs overlap in a time domain, in which the plurality of PUCCHs respectively carry UCI with different priorities.

In step S102, the UCI with different priorities, carried on the plurality of PUCCHs respectively, is combined.

In step S103, a target PUCCH is determined, in which a time domain end position of the target PUCCH is not later than a time domain end position of a PUCCH located by UCI with a highest priority.

In step S104, the combined UCI is transmitted through the target PUCCH.

In some embodiments, the plurality of PUCCHs configured by the base station may be detected to determine whether the plurality of PUCCHs overlap in the time domain, and the plurality of PUCCHs respectively carry UCI with different priorities.

The priority of the UCI can be determined in many ways, including but not limited to pre-configured by the base station, for example, the base station pre-configures the priority of the UCI carried on PUCCH_A to be higher than the priority of the UCI carried on PUCCH_B; or determined according to services, for example, the priority of the UCI transmitted for service a is higher than the priority of the UCI transmitted for service b, where service a can be a service allowed for a relatively low latency (such as a ultra-reliable & low-latency communication (URLLC) service), and service b can be a service allowed for a relatively high latency (such as an enhanced mobile broadband (eMMB) service).

In the case where it is determined that the plurality of PUCCHs overlap in the time domain, UCI of different priorities carried on the plurality of PUCCHs respectively can be combined. The combination manner can be selected according to needs, which is not limited in some embodiments.

The PUCCH located by the UCI with the highest priority is determined first, the time domain end position t₀ of this PUCCH is determined, and the time domain end position of each PUCCH configured by the base station is determined. For example, the base station configures the terminal for n PUCCHs, where the time domain end position of the i^{th} PUCCH is ti, and t₀ can be compared with ti, to determine the target PUCCH corresponding to tᵢ not later than t₀.

Since the moment when the PUCCH transmitting the UCI depends on the time domain end position of the PUCCH, the later time domain end position of the PUCCH, the later the moment when the UCI is transmitted, and the earlier time domain end position of the PUCCH, the earlier the moment when the UCI is transmitted.

In some embodiments, the target PUCCH is determined. Since the time domain end position of the target PUCCH is not later than the time domain end position of the PUCCH located by the UCI with the highest priority, the combined UCI is transmitted through the target PUCCH, which is not later than the UCI with the highest priority transmitted through the PUCCH located by the UCI with the highest priority, to ensure that the UCI with the highest priority may not be delayed in transmission.

Since the allowable time delay for the service corresponding to the UCI with the highest priority is generally lower, it is possible to further avoid the larger time delay for the service corresponding to the UCI with the highest priority.

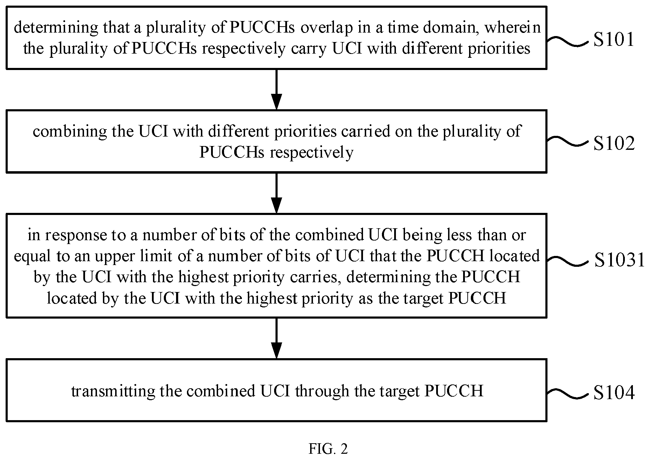

FIG. 2 is a flowchart illustrating another method for transmitting UCI, according to some embodiments of the disclosure. As illustrated in FIG. 2, determining the target PUCCH includes the following.

In step S 1031, in response to a number of bits of the combined UCI being less than or equal to an upper limit of a number of bits of UCI that the PUCCH located by the UCI with the highest priority carries, the PUCCH located by the UCI with the highest priority is determined as the target PUCCH.

In some embodiments, there may be different PFs, and the upper limits of the numbers of bits of UCI that can be carried by the PUCCHs with different PFs may also be different. For example, for PUCCHs in PFO and PF 1, the upper limit of the number of bits of the UCI that can be carried is 2 bits, and for PUCCHs in PF2, PF3, and PF4, the upper limit of the number of bits of the UCI that can be carried is greater than 2 bits.

Some embodiments can determine the number of bits of the combined UCI. If the number of bits of the combined UCI is less than or equal to, the upper limit of the number of bits of the UCI that can be carried by the PUCCH located by the UCI with the highest priority, it can be determined that the PUCCH located by the UCI with the highest priority is the target PUCCH, so that the combined UCI is transmitted through the PUCCH located by the UCI with the highest priority.

For PUCCHs in PFO and PF1, the number of bits of the UCI that can be carried is 2. For PUCCHs in PF2, PF3, and PF4, the upper limit of the number of bits of the UCI that can be carried is determined by a load upper limit of UCI configured in a PUCCH resource set to which the PUCCH belongs. For example, a PUCCH in PF2 belongs to a PUCCH resource set 2, and a load upper limit of UCI of the PUCCH resource set 2 is 128 bits, and the upper limit of the number of bits of UCI that the PUCCH in PF2 can carry can be determined to be 128bit.

Since the PUCCH located by the UCI with the highest priority is the same as the PUCCH that transmits the combined UCI, the time domain end position of the target PUCCH must be no later than the time domain end position of the PUCCH located by the UCI with the highest priority, to ensure that the UCI with the highest priority will not be delayed in transmission.

Optionally, the plurality of PUCCHs include two PUCCHs, a PUCCH format (PF) of the PUCCH located by the UCI with the highest priority is PFO or PF 1, a number of bits of UCI that each PUCCH carries is 1, and the target PUCCH is the PUCCH located by the UCI with the highest priority.

In some embodiments, when the plurality of PUCCHs are two PUCCHs, that is, when the two PUCCHs overlap in the time domain, if the channel format of the PUCCH located by the UCI with the highest priority is PFO or PF1, and the number of bits of UCI that each PUCCH carries is 1, and since the upper limit of the number of bits of UCI carried by the PUCCH in PF0 or PF1 is 2 bits, the combined UCI carried by the two PUCCHs is 2 bits, which is equal to the upper limit of the number of bits of UCI that the PUCCH in PFO or PF1 can carry, so that the PUCCH located by the UCI with the highest priority can be determined as the target PUCCH.

Optionally, the UCI includes at least one of the following:
a HARQ-ACK, a scheduling request (SR), or channel state information.

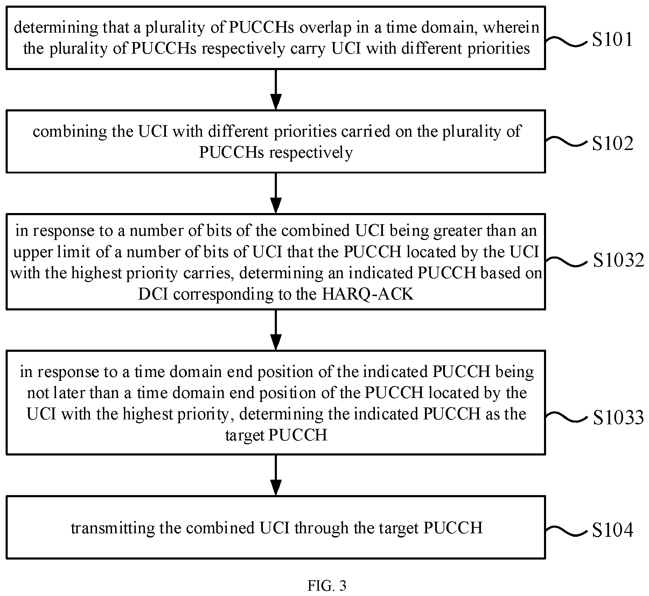

FIG. 3 is a flowchart illustrating yet another method for transmitting UCI, according to some embodiments of the disclosure. As illustrated in FIG. 3, UCI carried on at least one PUCCH of the plurality of PUCCHs is the HARQ-ACK, and determining the target PUCCH includes the following.

In step S1032, in response to a number of bits of the combined UCI being greater than an upper limit of a number of bits of UCI that the PUCCH located by the UCI with the highest priority carries, an indicated PUCCH is determined based on DCI corresponding to the HARQ-ACK.

In step S1033, in response to a time domain end position of the indicated PUCCH being not later than a time domain end position of the PUCCH located by the UCI with the highest priority, the indicated PUCCH is determined as the target PUCCH.

In some embodiments, if the number of bits of the combined UCI is greater than the upper limit of the number of bits of the UCI that the PUCCH located by the UCI with the highest priority carries, for example, if the channel format of the PUCCH located by the UCI with the highest priority is PF0, the upper limit of the number of bits of the UCI that the PUCCH located by the UCI with the highest priority carries is 2 bits, and the combined UCI is 4 bits, greater than 2 bits, the combined UCI may not transmitted successfully through the PUCCH located by the UCI with the highest priority.

The base station can transmit the DCI corresponding to the HARQ-ACK to the terminal, and indicate the PUCCH to the terminal through the DCI. For example, the base station can configure a plurality of PUCCH sets for the terminal in advance, and the terminal can determine the target set in the plurality of PUCCH sets based on the number of bits of the combined control information. Then the base station can carry an identifier in the DCI, and the terminal can further determine the PUCCH corresponding to the identifier in the target set according to the identifier in the DCI.

After determining the indicated PUCCH, it is also necessary to determine the time domain end position of the indicated PUCCH, and compare the time domain end position of the indicated PUCCH with the time domain end position of the PUCCH located by the UCI with the highest priority. If the time domain end position of the indicated PUCCH is not later than the time domain end position of the PUCCH located by the UCI with the highest priority, the combined uplink information is transmitted through the time domain end position of the indicated PUCCH, which may not cause the transmission of the UCI with the highest priority to be delayed, so that the indicated PUCCH can be determined as the target PUCCH to transmit the combined uplink information.

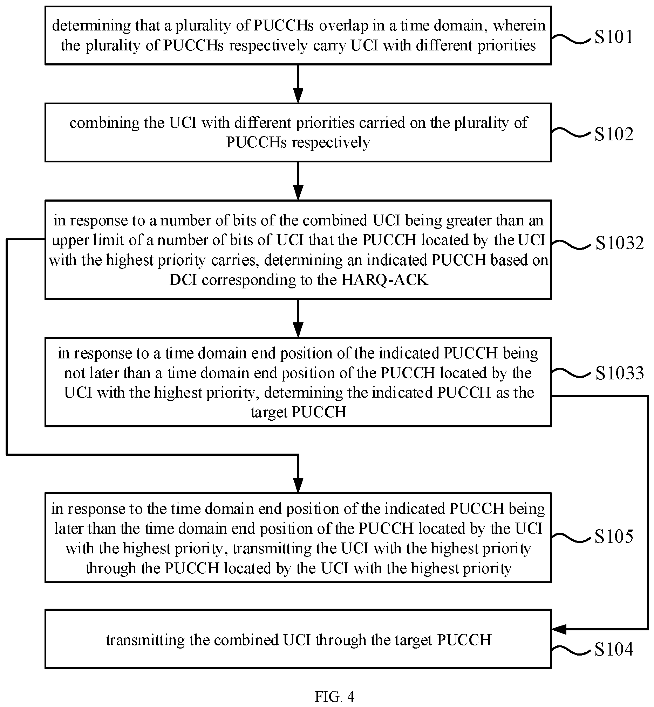

FIG. 4 is a flowchart illustrating yet another method for transmitting UCI, according to some embodiments of the disclosure. As illustrated in FIG. 4, the method further includes the following.

In step S105, in response to the time domain end position of the indicated PUCCH being later than the time domain end position of the PUCCH located by the UCI with the highest priority, the UCI with the highest priority is transmitted through the PUCCH located by the UCI with the highest priority.

In some embodiments, if the time domain end position of the indicated PUCCH is later than the time domain end position of the PUCCH located by the UCI with the highest priority, and if the combined UCI is transmitted through the time domain end position of the indicated PUCCH, it may cause subsequently that the UCI with the highest priority is to be delayed in transmission.

In this case, it is difficult not only to transmit the combined UCI, but also to ensure that the UCI with the highest priority is not delayed. Then the UCI with the highest priority is transmitted by the PUCCH located by the UCI with the highest priority, which gives a priority to ensure that the UCI with the highest priority is not delayed in transmission.

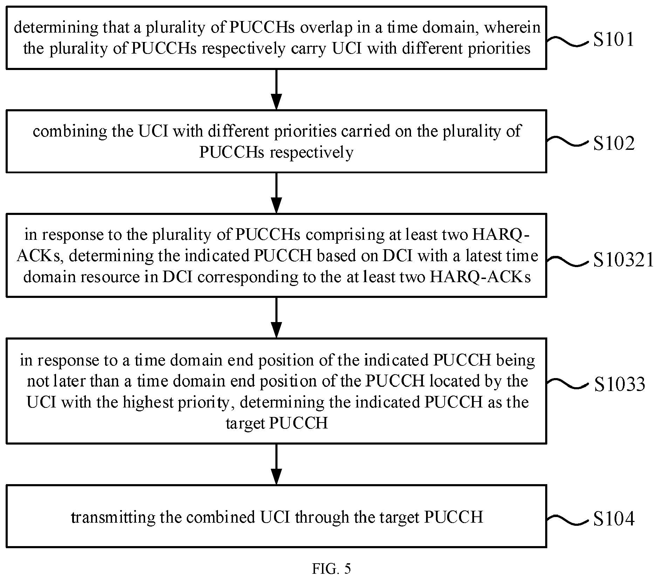

FIG. 5 is a flowchart illustrating yet another method for transmitting UCI, according to some embodiments of the disclosure. As illustrated in FIG. 5, determining the indicated PUCCH based on the DCI corresponding to the HARQ-ACK includes the following.

In step S10321, in response to the plurality of PUCCHs including at least two HARQ-ACKs, the indicated PUCCH is determined based on DCI with a latest time domain resource in DCI corresponding to the at least two HARQ-ACKs.

In some embodiments, if the plurality of PUCCHs include the at least two HARQ-ACKs, that is, the base station has transmitted two pieces of DCI to the terminal, the terminal may transmit the at least two HARQ-ACKs separately based on the two pieces of DCI to the base station, that is, the at least two HARQ-ACKs can be transmitted to the base station on the plurality of PUCCHs.

In this case, since the uplink resource for communication between the terminal and the base station is determined according to the DCI, and when the base station transmits the DCI with the earlier time domain resource, it may only indicate a few PUCCH time domain resources, whether the time domain resources of all PUCCHs overlap is not yet determined. When the base station transmits the DCI with the latest time domain resource, time domain resources of all PUCCHs have been indicated through all the DCI, so whether the time domains of all PUCCHs overlap can be accurately determined. Thus that, the identifier can be carried in the DCI corresponding to the latest time domain resource to accurately indicate the PUCCH that the terminal needs to use to transmit the combined UCI. The terminal may determine the indicated PUCCH based on the latest DCI.

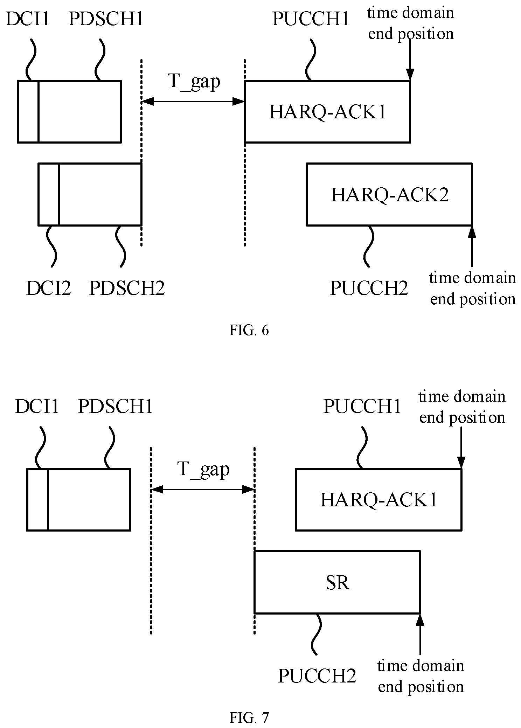

FIG. 6 is a schematic diagram illustrating an application scenario of a method for transmitting UCI, according to some embodiments of the disclosure. As illustrated in FIG. 6, the base station can transmit DCI1 and physical downlink shared channel (PDSCH) 1, as well as DCI2 and PDSCH2 to the terminal. For PDSCH1, the terminal can transmit HARQ-AKC1 to the base station through PUCCH1, and for PDSCH2, the terminal can transmit HARQ-AKC2 to the base station through PUCCH2, and PUCCH1 and PUCCH2 overlap in the time domain.

In this case, the time domain end position of PUCCH1 and the time domain end position of PUCCH2 can be determined first. Since the time domain end position of PUCCH1 is earlier than the time domain end position of PUCCH2, and if the priority of HARQ-ACK1 is higher than the priority of HARQ- ACK2, PUCCH1 can be selected as the target uplink control channel to transmit the UCI after the combination of HARQ-ACK1 and HARQ-ACK2, so as to ensure that HARQ-ACK1 will not be delayed.

FIG. 7 is a schematic diagram illustrating another application scenario of a method for transmitting UCI, according to some embodiments of the disclosure. As illustrated in FIG. 7, the base station can transmit DCI1 and PDSCH1 to the terminal. For PDSCH1, the terminal can transmit HARQ-AKC1 to the base station through PUCCH1. The base station can also configure a resource for transmitting SR to the terminal through a semi-static configuration, and the terminal can transmit the SR to the base station in PUCCH2. PUCCH1 and PUCCH2 overlap in the time domain.

In this case, the time domain end position of PUCCH1 and the time domain end position of PUCCH2 can be determined first. Since the time domain end position of PUCCH2 is earlier than the time domain end position of PUCCH1, and if the priority of the SR is higher than the priority of HARQ-ACK1, PUCCH2 can be selected as the target uplink control channel to transmit the UCI after the HARQ-ACK1 and SR are combined, so as to ensure that the SR will not be delayed.

It should be noted that in embodiments in FIG. 6 and FIG. 7 above, the time interval T_gap between the earliest time domain start position among the plurality of PUCCHs that overlap in the time domain and the latest time domain end position of the plurality of PDSCHs, needs to be greater than or equal to the predefined multiplexing time interval, so that the terminal can have enough time in the time interval to process the information from the base station and generate the information that needs to be transmitted to the base station.

Corresponding to the foregoing embodiments of the method for transmitting UCI, the disclosure also provides embodiments of an apparatus for transmitting UCI.

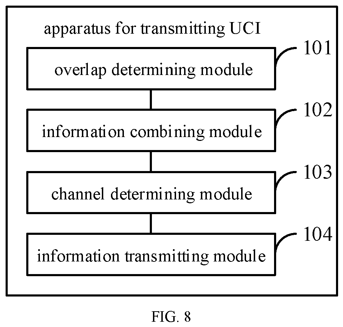

FIG. 8 is a block diagram illustrating an apparatus for transmitting UCI, according to some embodiments of the disclosure. The apparatus in some embodiments can be applicable to a terminal, which includes but is not limited to, an electronic device such as a mobile phone, a tablet computer, or a wearable device. The terminal may communicate with a base station, and the base station may be a 4G base station or a 5G base station.

As illustrated in FIG. 8, the apparatus includes an overlap determining module 101, an information combining module 102, a channel determining module 103, and an information transmitting module 104.

The overlap determining module 101 is configured to determine that a plurality of PUCCHs overlap in a time domain, in which the plurality of PUCCHs respectively carry UCI with different priorities.

The information combining module 102 is configured to combine the UCI with different priorities carried on the plurality of PUCCHs respectively.

The channel determining module 103 is configured to determine a target PUCCH, in which a time domain end position of the target PUCCH is not later than a time domain end position of a PUCCH located by UCI with a highest priority.

The information transmitting module 104 is configured to transmit the combined UCI through the target PUCCH.

Optionally, the information transmitting module is configured to, in response to a number of bits of the combined UCI being less than or equal to an upper limit of a number of bits of UCI that the PUCCH located by the UCI with the highest priority carries, determine the PUCCH located by the UCI with the highest priority as the target PUCCH.

Optionally, the plurality of PUCCHs includes two PUCCHs, a PUCCH format of the PUCCH located by the UCI with the highest priority is PFO or PF1, a number of bits of UCI that each PUCCH carries is 1, and the target PUCCH is the PUCCH located by the UCI with the highest priority.

Optionally, the UCI includes at least one of the following:
a HARQ-ACK, a scheduling request, or channel state information.

Optionally, UCI carried on at least one PUCCH of the plurality of PUCCHs is the HARQ-ACK, and the information transmitting module is configured to: in response to a number of bits of the combined UCI being greater than an upper limit of a number of bits of UCI that the PUCCH located by the UCI with the highest priority carries, determine an indicated PUCCH based on DCI corresponding to the HARQ-ACK; and in response to a time domain end position of the indicated PUCCH being not later than a time domain end position of the PUCCH located by the UCI with the highest priority, determine the indicated PUCCH as the target PUCCH.

Optionally, the information transmitting module is further configured to, in response to the time domain end position of the indicated PUCCH being later than the time domain end position of the PUCCH located by the UCI with the highest priority, transmit the UCI with the highest priority through the PUCCH located by the UCI with the highest priority.

Optionally, the channel determining module is further configured to, in response to the plurality of PUCCHs including at least two HARQ-ACKs, determine the indicated PUCCH based on DCI with a latest time domain resource in DCI corresponding to the at least two HARQ-ACKs.

With respect to the apparatuses in the above embodiments, the specific manners for performing operations for individual modules therein have been described in detail in the embodiments regarding the methods, which will not be elaborated herein.

For the apparatus embodiments, since they basically correspond the method embodiments, the relevant part can refer to the description of the method embodiments. The apparatus embodiments described above are merely illustrative. The modules described as separate components may or may not be physically separated, and the components displayed as modules may or may not be physical modules, that is, they may be located in one place or distributed to multiple network modules. Some or all of the modules can be selected according to actual needs to achieve the objectives of the solutions of the embodiments. Those of ordinary skill in the art can understand and implement without creative work.

Embodiments of the disclosure also proposes an electronic device, including:
a processor; and
a memory for storing instructions executable by the processor.

The processor is configured to perform the method for transmitting UCI as described in any of the foregoing embodiments.

Embodiments of the disclosure also proposes a computer-readable storage medium, on which computer programs are stored, and when the programs are executed by a processor, the actions in the method for transmitting UCI as described in any of the foregoing embodiments are performed.

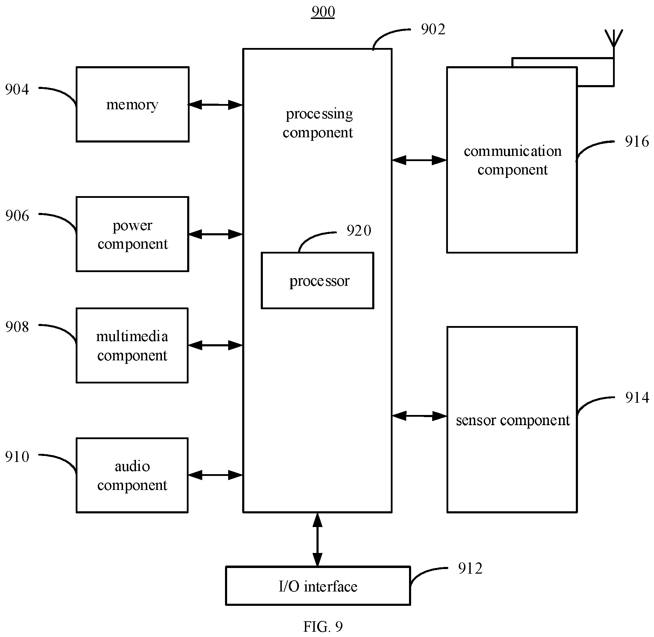

FIG. 9 is a block diagram illustrating a device 900 for transmitting UCI, according to some embodiments of the disclosure. For example, the device 900 may be a mobile phone, a computer, a digital broadcast terminal, a messaging device, a gaming console, a tablet, a medical device, exercise equipment, a personal digital assistant, and the like.

Referring to FIG. 9, the device 900 may include one or more of the following components: a processing component 902, a memory 904, a power component 906, a multimedia component 908, an audio component 910, an input/output (I/O) interface 912, a sensor component 914, and a communication component 916.

The processing component 902 typically controls overall operations of the device 900, such as the operations associated with display, telephone calls, data communications, camera operations, and recording operations. The processing component 902 may include one or more processors 920 to execute instructions to perform all or part of the steps in the above described methods. Moreover, the processing component 902 may include one or more modules which facilitate the interaction between the processing component 902 and other components. For instance, the processing component 902 may include a multimedia module to facilitate the interaction between the multimedia component 908 and the processing component 902.

The memory 904 is configured to store various types of data to support the operation of the device 900. Examples of such data include instructions for any applications or methods operated on the device 900, contact data, phonebook data, messages, pictures, video, etc. The memory 904 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 906 provides power to various components of the device 900. The power component 906 may include a power management system, one or more power sources, and any other components associated with the generation, management, and distribution of power in the device 900.

The multimedia component 908 includes a screen providing an output interface between the device 900 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 908 includes a front camera and/or a rear camera. The front camera and the rear camera may receive an external multimedia datum while the device 900 is in an operation mode, such as a photographing mode or a video mode. Each of the front camera and the rear camera may be a fixed optical lens system or have focus and optical zoom capability.

The audio component 910 is configured to output and/or input audio signals. For example, the audio component 910 includes a microphone ("MIC") configured to receive an external audio signal when the device 900 is in an operation mode, such as a call mode, a recording mode, and a voice recognition mode. The received audio signal may be further stored in the memory 904 or transmitted via the communication component 916. In some embodiments, the audio component 910 further includes a speaker to output audio signals.

The I/O interface 912 provides an interface between the processing component 902 and peripheral interface modules, such as a keyboard, a click wheel, buttons, and the like. The buttons may include, but are not limited to, a home button, a volume button, a starting button, and a locking button.

The sensor component 914 includes one or more sensors to provide status assessments of various aspects of the device 900. For instance, the sensor component 914 may detect an open/closed status of the device 900, relative positioning of components, e.g., the display and the keypad, of the device 900, a change in position of the device 900 or a component of the device 900, a presence or absence of user contact with the device 900, an orientation or an acceleration/deceleration of the device 900, and a change in temperature of the device 900. The sensor component 914 may include a proximity sensor configured to detect the presence of nearby objects without any physical contact. The sensor component 914 may also include a light sensor, such as a CMOS or CCD image sensor, for use in imaging applications. In some embodiments, the sensor component 914 may also include an accelerometer sensor, a gyroscope sensor, a magnetic sensor, a pressure sensor, or a temperature sensor.

The communication component 916 is configured to facilitate communication, wired or wirelessly, between the device 900 and other devices. The device 900 can access a wireless network based on a communication standard, such as WiFi, 2G, or 3G, 4G LTE, 5G NR, or a combination thereof. In one some embodiment, the communication component 916 receives a broadcast signal or broadcast associated information from an external broadcast management system via a broadcast channel. In one some embodiment, the communication component 916 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In some embodiments, the device 900 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In some embodiments, there is also provided a non-transitory computer readable storage medium including instructions, such as included in the memory 904, executable by the processor 920 in the device 900, for performing the above-described methods. For example, the non-transitory computer-readable storage medium may be a ROM, a RAM, a CD-ROM, a magnetic tape, a floppy disc, an optical data storage device, and the like.

Other embodiments of the disclosure will be apparent to those skilled in the art from consideration of the specification and practice of the disclosure disclosed here. This application is intended to cover any variations, uses, or adaptations of the disclosure following the general principles thereof and including such departures from the disclosure as come within known or customary practice in the art. It is intended that the specification and examples be considered as exemplary only, with a true scope and spirit of the disclosure being indicated by the following claims.

It will be appreciated that the disclosure is not limited to the exact construction that has been described above and illustrated in the accompanying drawings, and that various modifications and changes can be made without departing from the scope thereof. It is intended that the scope of the disclosure only be limited by the appended claims.

It should be noted that in the disclosure, relational terms such as first and second are only used to distinguish one entity or operation from another entity or operation, and do not necessarily require or imply any such actual relationship or order between these entities or operations. The terms "including", "comprising" or any other variation thereof are intended to cover nonexclusive inclusion, so that a process, method, article or device including a series of elements not only includes those elements, but also includes other elements not explicitly listed, or also includes elements inherent in such process, method, article or device. Without further restrictions, the elements defined by the statement "including one..." do not exclude that there are other identical elements in the process, method, article or device including the elements.

The methods and apparatuses provided by embodiments of the disclosure are described in detail above. In this disclosure, specific examples are used to illustrate the principles and implementation manners of the disclosure. The description of the above embodiments is only used to help understand the methods and core ideas of the disclosure. At the same time, for those of ordinary skill in the art, according to the idea of the disclosure, there will be changes in the specific implementation mode and application scope. In conclusion, the content of the specification should not be interpreted as a limitation on the disclosure.

## Claims

1. A method for transmitting uplink control information, comprising:
determining that a plurality of physical uplink control channels (PUCCHs) overlap in a time domain, wherein the plurality of PUCCHs respectively carry uplink control information with different priorities;
combining the uplink control information with different priorities carried on the plurality of PUCCHs respectively;
determining a target PUCCH, wherein a time domain end position of the target PUCCH is not later than a time domain end position of a PUCCH located by uplink control information with a highest priority; and
transmitting the combined uplink control information through the target PUCCH.

2. The method as claimed in claim 1, wherein determining the target PUCCH comprises:
in response to a number of bits of the combined uplink control information being less than or equal to an upper limit of a number of bits of uplink control information that the PUCCH located by the uplink control information with the highest priority carries, determining the PUCCH located by the uplink control information with the highest priority as the target PUCCH.

3. The method as claimed in claim 2, wherein the plurality of PUCCHs comprise two PUCCHs, a PUCCH format (PF) of the PUCCH located by the uplink control information with the highest priority is PFO or PF1, a number of bits of uplink control information that each PUCCH carries is 1, and the target PUCCH is the PUCCH located by the uplink control information with the highest priority.

4. The method as claimed in claim 1, wherein the uplink control information comprises at least one of the following:
a hybrid automatic repeat request acknowledgement, a scheduling request, or channel state information.

5. The method as claimed in claim 4, wherein uplink control information carried on at least one PUCCH of the plurality of PUCCHs is the hybrid automatic repeat request acknowledgement, and determining the target PUCCH comprises:
in response to a number of bits of the combined uplink control information being greater than an upper limit of a number of bits of uplink control information that the PUCCH located by the uplink control information with the highest priority carries, determining an indicated PUCCH based on downlink control information corresponding to the hybrid automatic repeat request acknowledgement; and
in response to a time domain end position of the indicated PUCCH being not later than a time domain end position of the PUCCH located by the uplink control information with the highest priority, determining the indicated PUCCH as the target PUCCH.

6. The method as claimed in claim 5, further comprising:
in response to the time domain end position of the indicated PUCCH being later than the time domain end position of the PUCCH located by the uplink control information with the highest priority, transmitting the uplink control information with the highest priority through the PUCCH located by the uplink control information with the highest priority.

7. The method as claimed in claim 5, wherein determining the indicated PUCCH based on the downlink control information corresponding to the hybrid automatic repeat request acknowledgement comprises:
in response to the plurality of PUCCHs comprising at least two hybrid automatic repeat request acknowledgements, determining the indicated PUCCH based on downlink control information with a latest time domain resource in downlink control information corresponding to the at least two hybrid automatic repeat request acknowledgements.

8. An apparatus for transmitting uplink control information, comprising:
an overlap determining module, configured to determine that a plurality of physical uplink control channels (PUCCHs) overlap in a time domain, wherein the plurality of PUCCHs respectively carry uplink control information with different priorities;
an information combining module, configured to combine the uplink control information with different priorities carried on the plurality of PUCCHs respectively;
a channel determining module, configured to determine a target PUCCH, wherein a time domain end position of the target PUCCH is not later than a time domain end position of a PUCCH located by uplink control information with a highest priority; and
an information transmitting module, configured to transmit the combined uplink control information through the target PUCCH.

9. The apparatus as claimed in claim 8, wherein the information transmitting module is configured to, in response to a number of bits of the combined uplink control information being less than or equal to an upper limit of a number of bits of uplink control information that the PUCCH located by the uplink control information with the highest priority carries, determine the PUCCH located by the uplink control information with the highest priority as the target PUCCH.

10. The apparatus as claimed in claim 9, wherein the plurality of PUCCHs comprise two PUCCHs, a PUCCH format (PF) of the PUCCH located by the uplink control information with the highest priority is PFO or PF1, a number of bits of uplink control information that each PUCCH carries is 1, and the target PUCCH is the PUCCH located by the uplink control information with the highest priority.

11. The apparatus as claimed in claim 8, wherein the uplink control information comprises at least one of the following:
a hybrid automatic repeat request acknowledgement, a scheduling request, or channel state information.

12. The apparatus as claimed in claim 11, wherein uplink control information carried on at least one PUCCH of the plurality of PUCCHs is the hybrid automatic repeat request acknowledgement, and the information transmitting module is configured to: in response to a number of bits of the combined uplink control information being greater than an upper limit of a number of bits of uplink control information that the PUCCH located by the uplink control information with the highest priority carries, determine an indicated PUCCH based on downlink control information corresponding to the hybrid automatic repeat request acknowledgement; and in response to a time domain end position of the indicated PUCCH being not later than a time domain end position of the PUCCH located by the uplink control information with the highest priority, determine the indicated PUCCH as the target PUCCH.

13. The apparatus as claimed in claim 12, wherein the information transmitting module is further configured to, in response to the time domain end position of the indicated PUCCH being later than the time domain end position of the PUCCH located by the uplink control information with the highest priority, transmit the uplink control information with the highest priority through the PUCCH located by the uplink control information with the highest priority.

14. The apparatus as claimed in claim 12, wherein the channel determining module is further configured to, in response to the plurality of PUCCHs comprising at least two hybrid automatic repeat request acknowledgements, determine the indicated PUCCH based on downlink control information with a latest time domain resource in downlink control information corresponding to the at least two hybrid automatic repeat request acknowledgements.

15. An electronic device, comprises:
a processor; and
a memory for storing instructions executable by the processor;
wherein, the processor is configured to perform the method for transmitting uplink control information as claimed in any one of claims 1 to 7.

16. A computer-readable storage medium having stored therein computer programs that, when executed by a processor, actions in the method for transmitting uplink control information as claimed in any one of claims 1 to 7 are realized.
